# FASCICULE DE BREVET EUROPEEN

(11) **EP 2 148 105 B1**
(45) Date de publication et mention de la délivrance du brevet: **26.12.2012**
(21) Numéro de dépôt: 09305549.9
(22) Date de dépôt: 16.06.2009
(51) Int. Cl.: F16C 35/073, B62K 19/34

(54) **Pédalier de cycle monobloc**
Monoblock-Fahrradkurbelgarnitur
Single-piece cycle crankset

(30) Priorité: 23.07.2008 FR 0804195
(43) Date de publication de la demande: 27.01.2010
(73) Titulaire: Look Cycle International, 58000 Nevers (FR)
(72) Inventeur: Lanz, Matthieu, 58000 Nevers (FR)
(74) Mandataire: Laget, Jean-Loup

(56) Documents cités:
- US-A- 4 545 691
- US-B1- 6 264 226

## Description

La présente invention concerne un pédalier de cycle, et en particulier un pédalier monobloc, ainsi qu'un cycle pourvu d'un tel pédalier.

Les pédaliers de cycle comportent un axe de pédalier, deux manivelles fixées aux extrémités de l'axe, et un grand pignon solidaire en rotation de l'axe de pédalier. Les manivelles s'étendent dans des sens opposés et comportent à leur extrémité libre des moyens de fixation d'un axe de pédale. Ces moyens de fixation sont en général constitués par un simple trou taraudé recevant l'extrémité filetée de l'axe de pédale.

L'axe de pédalier est apte à être reçu dans un tube de pédalier d'un cadre de cycle avec interposition de roulements disposés aux extrémités de l'axe de pédalier et formant ainsi un moyeu permettant la rotation de l'axe de pédalier à l'intérieur du tube de pédalier.

Il existe des pédaliers de cycle monobloc, entre autres destinés à l'obtention d'une meilleure précision de l'emplacement relatif des parties différentes d'un pédalier de cycle. Dans un pédalier monobloc classique, l'axe de pédalier et les deux manivelles forment ensemble une seule pièce en métal qui présente globalement la forme d'un "Z".

Un tel pédalier de cycle monobloc est connu du brevet US4418584 qui décrit un pédalier de cycle dont l'axe de pédalier et les manivelles sont fabriqués en une seule pièce. Ce document concerne en particulier la façon de monter le grand pignon sur le pédalier de cycle en vue d'un remplacement facilité si ce grand pignon est endommagé.

Un pédalier de cycle monobloc selon le préambule de la revendication 1 est décrit dans le brevet US4545691 qui montre un pédalier monobloc similaire dans lequel les bagues intérieures des deux roulements sont reliées l'une à l'autre par un manchon.

La tendance générale étant de rendre tous les composants d'un cycle aussi légers que possible tout en assurant une bonne tenue mécanique, il serait avantageux de pouvoir utiliser un pédalier monobloc entièrement en matériau composite. Cependant, le carbone, peu résistant à l'abrasion, rend pratiquement impossible un appui direct des roulements qui en outre doivent parfois être démontés et remplacés pour les opérations de maintenance.

Pour cette raison, tout en souhaitant une structure allégée à l'aide de matériaux composites, on a jusqu'à ce jour été obligé de se limiter à des pédaliers de cycle en plusieurs parties dont principalement les manivelles sont en matériaux composites. Cependant, il est dans ce cas inévitable d'utiliser des inserts métalliques dans les extrémités pour assurer une bonne fixation des manivelles sur l'axe de pédalier, le plus souvent à l'aide de cannelures. Le souhait est de rendre l'ensemble moins lourd, mais les inserts ajoutent nécessairement du poids, entraînent un surcoût de fabrication et rendent le pédalier complexe pour garantir une bonne tenue mécanique.

Une autre solution pour rendre le pédalier de cycle plus léger consisterait à utiliser un alliage léger creux, mais jusqu'ici on s'est également limité à des pédaliers de cycle en plusieurs parties dont principalement les manivelles sont en un alliage léger creux. Un tel pédalier est connu du document EP 0 850 825.

Cette limitation est probablement dû au fait qu'un pédalier de cycle monobloc d'un seul tenant en un alliage creux poserait le problème de la rigidité des parois minces de l'axe de pédalier qui à l'endroit de l'emplacement des roulements risqueraient de se déformer sous les efforts. Pour cette raison, un pédalier de cycle monobloc de ce genre n'a pas encore été envisagé.

Le but de l'invention est de remédier à ces inconvénients en proposant une solution permettant l'utilisation d'un pédalier de cycle monobloc en un matériau composite ou en un alliage léger creux afin d'alléger notablement l'ensemble du pédalier. Dans le premier cas, il est possible de supprimer un nombre important de pièces de liaison comme vis, écrous ou rondelles, ainsi que les inserts correspondants. Dans le deuxième cas, la nouvelle conception apporte une rigidité améliorée de tout l'ensemble et permet d'utiliser le maximum du volume disponible en même temps que les parois peuvent être rendues relativement minces pour maintenir un poids réduit.

L'objet de l'invention est un pédalier de cycle monobloc, comportant une première manivelle reliée à une deuxième manivelle par un axe de pédalier en formant avec celui-ci une pièce d'un seul tenant, l'axe de pédalier étant apte à être logé dans un tube de pédalier d'un cadre de cycle avec interposition d'un premier roulement et d'un deuxième roulement disposés autour de l'axe de pédalier à proximité des extrémités de celui-ci afin de permettre la rotation de l'axe de pédalier à l'intérieur dudit tube de pédalier, un grand pignon d'entraînement d'une chaîne étant disposé à proximité de l'une des extrémités de l'axe de pédalier et solidaire en rotation avec celui-ci, une première et une deuxième bagues intermédiaires en un matériau à rigidité élevée et résistant à l'abrasion étant fixées sur l'axe de pédalier à proximité d'une extrémité respective de celui-ci pour recevoir un roulement respectif, caractérisé par le fait que lesdites bagues intermédiaires sont fixées sur l'axe de pédalier par polymérisation dudit matériau composite de l'axe de pédalier suite à une expansion dudit matériau.

Selon d'autres caractéristiques de l'invention :
- le matériau du pédalier est un matériau composite ;
- le matériau du pédalier est un alliage léger creux ;
- lesdites bagues intermédiaires sont fixées sur l'axe de pédalier par l'expansion de l'alliage lors du formage du pédalier ;
- ladite bague intermédiaire la plus éloignée du grand pignon est sur son extrémité dirigée vers l'extérieur pourvue d'un filetage apte à coopérer avec une bague d'assemblage taraudée ;
- ladite bague d'assemblage est fendue afin de recevoir dans sa fente une cale d'épaisseur facilitant lors de l'assemblage le vissage de la bague d'assemblage sur le filetage de la bague intermédiaire ;
- ladite bague d'assemblage comporte un trou de fixation s'étendant perpendiculairement à la fente de la bague d'assemblage de part et d'autre de celle-ci pour recevoir une vis de fixation et de serrage ;
- l'axe de pédalier présente un évidement central concave facilitant l'assemblage du pédalier avec le cadre ;
- ledit grand pignon est constitué par un plateau denté circulaire porté par un porte-plateau, et ledit porte-plateau fait partie de ladite une pièce d'un seul tenant ;
- le porte-plateau est en forme d'étoile dont les branches prennent naissance directement sur l'extrémité de la première manivelle reliée à l'axe de pédalier en étant centrées sur l'axe A-A de celui-ci ;
- ledit premier roulement est immobilisé sur l'axe de pédalier à l'aide de deux bagues d'arrêt disposées de part et d'autre du roulement et entrant dans des gorges correspondantes prévues sur l'axe de pédalier ;
- le matériau à rigidité élevée et résistant à l'abrasion des première et deuxième bagues intermédiaires est un alliage léger.

Un autre objet de l'invention est un cycle pourvu d'un pédalier tel que défini ci-dessus.

D'autres caractéristiques et avantages de l'invention ressortiront de la description qui va suivre d'un mode de réalisation non limitatif de l'invention, en référence aux figures annexées dans lesquelles :
- la figure 1 est une vue en perspective éclatée d'un pédalier de cycle monobloc selon l'invention ;
- la figure 2 est une vue partielle en perspective du pédalier de cycle avec un sous-ensemble préassemblé avant son assemblage sur un tube de pédalier d'un cadre de cycle ;
- la figure 3 est une vue partielle en perspective d'un tube de pédalier préparé avec la mise en place d'un roulement avant de recevoir le pédalier de cycle de la figure 2 ;
- la figure 4 est une vue partielle en coupe selon la ligne A-A de la figure 2;
- la figure 5 est une vue partielle en perspective illustrant la dernière phase de l'assemblage du pédalier de cycle avec le tube de pédalier de la figure 3 ;
- les figures 6 à 8 montrent trois phases consécutives de l'assemblage du pédalier de cycle avec le tube de pédalier.

Dans les figures, les éléments identiques ou équivalents porteront les mêmes signes de référence.

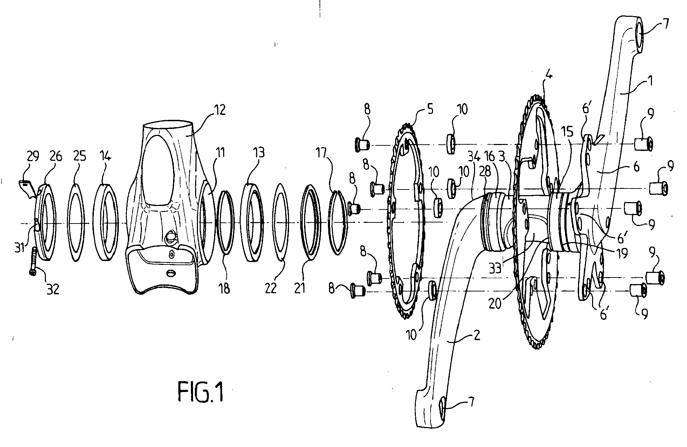

La figure 1 montre un pédalier de cycle selon l'invention comportant une première manivelle 1 reliée à une deuxième manivelle 2 par un axe de pédalier 3. Les manivelles 1 et 2 s'étendent dans des sens opposés à partir d'une extrémité respective de l'axe de pédalier 3. Les manivelles 1 et 2 sont aptes à porter à leur extrémité une pédale respective (non représentées) dont l'axe fileté peut être vissé dans un trou taraudé 7 à l'extrémité de la manivelle.

Dans l'exemple illustré, le pédalier comporte deux grands pignons constitués par un premier plateau denté circulaire 4 et un deuxième plateau denté circulaire 5 fixés sur un porte-plateau 6 en forme d'étoile solidaire en rotation de l'axe de pédalier 3. Les dents des premier et deuxième plateaux 4, 5 sont aptes à coopérer avec une chaîne d'entraînement (non représentée) qui à son tour entraîne en rotation la roue arrière (non représentée) d'un cycle.

Ce pédalier de cycle est ainsi à plateaux doubles, c'est-à-dire qu'il comporte un premier plateau denté 4 qui est plus grand que le deuxième plateau denté 5 pour l'obtention d'un grand développement pour l'utilisation du cycle en descente ou en plaine, alors que le deuxième plateau 5, plus petit, permet de monter plus facilement les côtes ou de démarrer plus aisément.

Les premier et deuxième plateaux 4, 5 sont fixés sur les branches 6' du porte-plateau 6 à l'aide de moyens de fixation tels que des vis 8 qui traversent des trous prévus dans les plateaux et dans le porte-plateau pour coopérer avec des écrous 9, avec interposition d'entretoises 10 entre les premier et deuxième plateaux.

L'axe de pédalier 3 est apte à être logé dans un tube de pédalier 11 d'un cadre de cycle 12 dont seulement la partie concernée par l'invention est montrée sur les figures. Afin de permettre la rotation de l'axe de pédalier 3 à l'intérieur du tube de pédalier 11, un premier roulement 13 et un deuxième roulement 14 relient l'axe de pédalier au tube de pédalier en étant disposés autour de l'axe de pédalier à proximité des extrémités de celui-ci. Ce montage sera décrit en détail plus loin.

Selon un aspect de l'invention, les première et deuxième manivelles 1, 2 ainsi que l'axe de pédalier 3 sont en un matériau composite. Selon un autre aspect de l'invention, les première et deuxième manivelles 1, 2 ainsi que l'axe de pédalier 3 sont en un alliage léger creux, par exemple formé par hydroformage.

Selon une caractéristique essentielle de l'invention, une première et deuxième bagues intermédiaires 15, 16 en un matériau à rigidité élevée et résistant à l'abrasion sont fixées sur l'axe de pédalier 3 à proximité d'une extrémité respective de celui-ci pour recevoir en liaison serrée un roulement respectif 13, 14.

Afin d'alléger davantage l'ensemble, le matériau à rigidité élevée et résistant à l'abrasion des première et deuxième bagues intermédiaires 15, 16 est de préférence un alliage léger présentant les caractéristiques nécessaires pour bien résister à l'abrasion.

Les bagues intermédiaires 15, 16 peuvent être fixées sur l'axe de pédalier 3 par collage ou, très avantageusement, dans le cas où le matériau du pédalier monobloc est un matériau composite, elles peuvent y être fixées par la polymérisation du matériau composite de l'axe de pédalier suite à une expansion du matériau qui peut par exemple être obtenue par gonflage avec de l'air comprimé.

D'une manière analogue dans le cas où le matériau du pédalier monobloc est un alliage léger, les bagues intermédiaires 15, 16 peuvent être fixées sur l'axe de pédalier 3 lors de la fabrication du pédalier monobloc, et plus précisément les bagues 15, 16 sont lors de la fabrication mises en place sur l'axe de pédalier pour être fixées par l'expansion de l'alliage lors de l'hydroformage.

Selon une autre caractéristique importante de l'invention, le porte-plateau 6 fait partie de la pièce d'un seul tenant formée par les manivelles 1, 2 et l'axe de pédalier 3. Dans le mode de réalisation illustré sur les figures, les branches 6' du porte-plateau 6 prennent naissance directement sur l'extrémité de la première manivelle 1 reliée à l'axe de pédalier 3, en étant centrées sur l'axe A-A de celui-ci.

D'autres éléments utilisés pour l'assemblage du pédalier avec le tube du pédalier 11 du cadre 12 sont illustrés sur la figure 1.

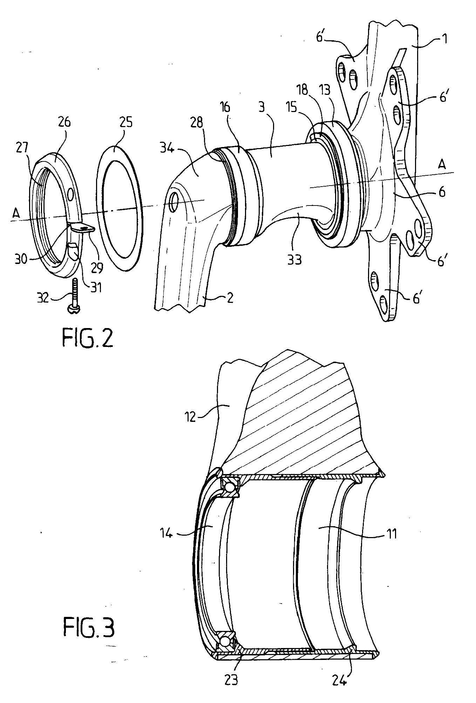

Ainsi, pour l'assemblage il est avantageux de fixer au préalable le premier roulement 13 sur l'axe de pédalier 3 (voir figure 2) et le deuxième roulement 14 dans le tube de pédalier 11 du cadre (voir figure 3).

Le premier roulement 13 est immobilisé sur l'axe de pédalier 3 à l'aide de deux bagues d'arrêt 17, 18 disposées de part et d'autre du roulement 13 et entrant dans des gorges correspondantes 19, 20 prévues sur l'axe de pédalier. Une rondelle 21 et un joint d'étanchéité 22 sont placés entre le roulement 13 et la bague d'arrêt 17 du côté du porte-plateau 6. De cette manière est obtenu un sous-ensemble maintenu en place lors de l'assemblage.

Le deuxième roulement 14 est fixé à l'intérieur du tube de pédalier 11 contre une première nervure circulaire de butée 23, comme cela est illustré à la figure 3. Une deuxième nervure circulaire de butée 24 est prévue dans le tube de pédalier 11, contre laquelle doit par la suite venir s'appuyer le premier roulement 13.

Finalement, un joint d'étanchéité 25 est lors de l'assemblage placé contre la face extérieure du deuxième roulement 14 et tout l'ensemble est maintenu en place à l'aide d'une bague d'assemblage 26 qui comporte un taraudage 27 apte à coopérer avec un filetage 28 prévu sur la deuxième bague intermédiaire 16, du côté du bord extérieur de celle-ci.

La bague d'assemblage 26 est de préférence fendue pour que son vissage sur le filetage 28 soit facilité par l'introduction d'une cale d'épaisseur 29 dans la fente 30 de la bague qui maintient celle-ci écartée à la bonne dimension et on peut alors facilement visser la bague d'assemblage 26 sur le filetage 28 de la deuxième bague intermédiaire 16, jusqu'à l'obtention d'un assemblage libre mais sans jeu excessif.

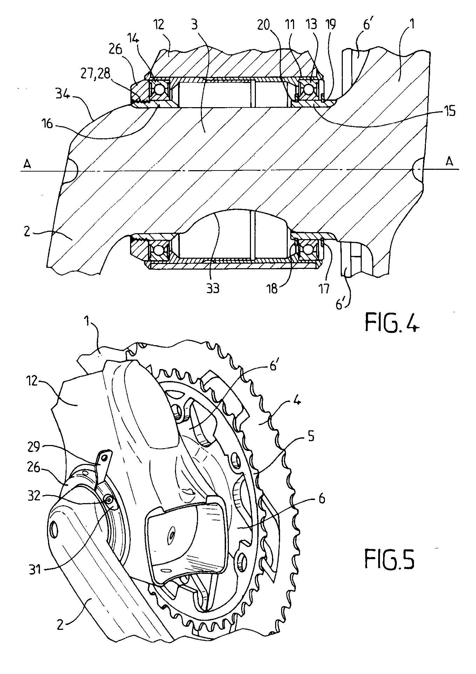

La figure 5 montre la dernière phase de cet assemblage suite à quoi la cale d'épaisseur 29 est éloignée après ce réglage, alors que la figure 4 montre la position relative des pièces assemblées sur l'axe de pédalier 3.

La bague d'assemblage 26 comporte pour son maintien fiable avantageusement un trou de fixation 31 s'étendant perpendiculairement à la fente 30 de la bague 26 de part et d'autre de celle-ci pour recevoir une vis de fixation et de serrage 32. Le trou de fixation 31 est de préférence taraudé pour coopérer directement avec le filetage de la vis 32.

Pour faciliter l'introduction et le déplacement de l'axe de pédalier 3 à l'intérieur du tube de pédalier 11 lors de l'assemblage, l'axe de pédalier 3 présente avantageusement un évidement central concave 33 pour qu'il ne gêne pas à l'assemblage du pédalier avec le cadre. Cet évidement 33 peut être combiné avec une conformation arrondie convexe 34 sur la partie naissante de la deuxième manivelle 2.

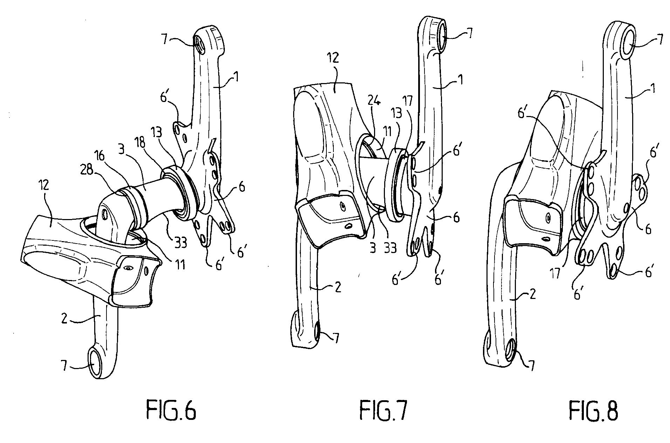

Finalement, les figures 6 à 8 illustrent trois phases consécutives de l'assemblage du pédalier selon l'invention sur un cadre de cycle.

Bien entendu, l'invention n'est pas limitée aux exemples illustrés et décrits, et il est à la portée de l'homme du métier de prévoir de nombreuses variantes sans pour autant sortir du cadre de l'invention.

## Revendications

1. Pédalier de cycle monobloc, comportant une première manivelle (1) reliée à une deuxième manivelle (2) par un axe de pédalier (3) en formant avec celui-ci une pièce d'un seul tenant, l'axe de pédalier (3) étant apte à être logé dans un tube de pédalier (11) d'un cadre de cycle (12) avec interposition d'un premier roulement (13) et d'un deuxième roulement (14) disposés autour de l'axe de pédalier (3) à proximité des extrémités de celui-ci afin de permettre la rotation de l'axe de pédalier à l'intérieur dudit tube de pédalier (11), un grand pignon (4, 5) d'entraînement d'une chaîne étant disposé à proximité de l'une des extrémités de l'axe de pédalier (3) et solidaire en rotation avec celui-ci, une première et une deuxième bagues intermédiaires (15, 16) en un matériau à rigidité élevée et résistant à l'abrasion étant fixées sur l'axe de pédalier (3) à proximité d'une extrémité respective de celui-ci pour recevoir un roulement respectif (13, 14), **caractérisé par le fait que** le matériau du pédalier est un matériau composite et que lesdites bagues intermédiaires (15, 16) sont fixées sur l'axe de pédalier (3) par polymérisation dudit matériau composite de l'axe de pédalier suite à une expansion dudit matériau.

2. Pédalier de cycle monobloc selon la revendication 1, **caractérisé par le fait que** le matériau du pédalier est un alliage léger creux.

3. Pédalier de cycle monobloc selon la revendication 2, **caractérisé par le fait que** lesdites bagues intermédiaires (15, 16) sont fixées sur l'axe de pédalier (3) par l'expansion de l'alliage lors du formage du pédalier.

4. Pédalier de cycle monobloc selon l'une quelconque des revendications précédentes, **caractérisé par le fait que** ladite bague intermédiaire (16) la plus éloignée du grand pignon (4, 5) est sur son extrémité dirigée vers l'extérieur pourvue d'un filetage (28) apte à coopérer avec une bague d'assemblage taraudée (26).

5. Pédalier de cycle monobloc selon la revendication 4, **caractérisé par le fait que** ladite bague d'assemblage (26) est fendue afin de recevoir dans sa fente (30) une cale d'épaisseur (29) facilitant lors de l'assemblage le vissage de la bague d'assemblage (26) sur le filetage (28) de ladite bague intermédiaire (16).

6. Pédalier de cycle monobloc selon la revendication 5, **caractérisé par le fait que** ladite bague d'assemblage (26) comporte un trou de fixation (31) s'étendant perpendiculairement à la fente (30) de la bague d'assemblage (26) de part et d'autre de celle-ci pour recevoir une vis de fixation et de serrage (32).

7. Pédalier de cycle monobloc selon l'une quelconque des revendications précédentes, **caractérisé par le fait que** l'axe de pédalier (3) présente un évidement central concave (33) facilitant l'assemblage du pédalier avec le cadre.

8. Pédalier de cycle monobloc selon l'une quelconque des revendications précédentes, dans lequel ledit grand pignon (4, 5) est constitué par un plateau denté circulaire porté par un porte-plateau (6), **caractérisé par le fait que** ledit porte-plateau (6) fait partie de ladite une pièce d'un seul tenant (1, 2, 3). 8,

9. Pédalier de cycle monobloc selon la revendication 8, **caractérisé par le fait que** porte-plateau (6) est en forme d'étoile dont les branches (6') prennent naissance directement sur l'extrémité de la première manivelle (1) reliée à l'axe de pédalier (3) en étant centrées sur l'axe (A-A) de celui-ci.

10. Pédalier de cycle monobloc selon l'une quelconque des revendications précédentes, **caractérisé par le fait que** ledit premier roulement (13) est immobilisé sur l'axe de pédalier (3) à l'aide de deux bagues d'arrêt (17, 18) disposées de part et d'autre du roulement (13) et entrant dans des gorges correspondantes (19, 20) prévues sur l'axe de pédalier (3).

11. Pédalier de cycle monobloc selon l'une quelconque des revendications précédentes, **caractérisé par le fait que** le matériau à rigidité élevée et résistant à l'abrasion des première et deuxième bagues intermédiaires (15, 16) est un alliage léger.

12. Cycle à pédalier de cycle monobloc, **caractérisé par le fait que** le pédalier présente les caractéristiques de l'une quelconque des revendications 1 à 11.

## Claims

1. A one-piece cycle crankset, including a first crank (1) connected to a second crank (2) through a crankset axis (3), forming with the latter, a one-piece part, the crankset axis (3) being able to be housed in a crankset tube (11) of a cycle frame (12) with interposition of a first bearing (13) and of a second bearing (14) positioned around the crankset axis (3) near the ends of the latter in order to allow rotation of the crankset axis inside said crankset tube (11), a large gear wheel (4,5) for driving a chain being positioned near one of the ends of the crankset axis (3) and interdependent in rotation with the latter, first and second intermediate rings (15, 16) in a high rigidity and abrasion-resistant material being attached onto the crankset axis (3) near a respective end of the latter in order to receive a respective bearing (13, 14), **characterized by** the fact that the material of the crankset is a composite material and that said intermediate rings (15, 16) are attached onto the crankset axis (3) by polymerization of said composite material of the crankset axis following expansion of said material.

2. The one-piece cycle crankset according to claim 1, **characterized by** the fact that the material of the crankset is a hollow lightweight alloy.

3. The one-piece cycle crankset according to claim 2, **characterized by** the fact that said intermediate rings (15, 16) are attached on the crankset axis (3) by expansion of the alloy upon forming the crankset.

4. The one-piece cycle crankset according to any of the preceding claims, **characterized by** the fact that said intermediate ring (16), the farthest away from the large gear wheel (4, 5) is, on its outward-oriented end, provided with a threading (28) capable of cooperating with a tapped assembling ring (26).

5. The one-piece cycle crankset according to claim 4, **characterized by** the fact that said assembling ring (26) is slotted in order to receive in its slot (30), a thickness shim (29) facilitating, during the assembling, the screwing of the assembling ring (26) onto the threading (28) of said intermediate ring (16).

6. The one-piece cycle crankset according to claim 5, **characterized by** the fact that said assembling ring (26) includes an attachment hole (31) extending perpendicularly to the slot (30) of the assembling ring (26) on either side of the latter for receiving a fixing and tightening screw (32).

7. The one-piece cycle crankset according to any of the preceding claims, **characterized by** the fact that the crankset axis (3) has a concave central recess (33) facilitating the assembling of the crankset with the frame.

8. The one-piece cycle crankset according to any of the preceding claims, wherein said large gear wheel (4, 5) is formed by a circular toothed plate borne by a plate-holder (6), **characterized by** the fact that said plate-holder (6) is part of said single one-piece part (1, 2, 3).

9. The one-piece cycle crankset according to claim 8, **characterized by** the fact that the plate-holder (6) is star-shaped, the branches (6') of which originate directly on the end of the first crank (1) connected to the crankset axis (3), while being centered on the axis (A-A) of the latter.

10. The one-piece cycle crankset according to any of the preceding claims, **characterized by** the fact that said first bearing (13) is immobilized on the crankset axis (3) by means of two locating rings (17, 18) positioned on either side of the bearing (13) and entering matching grooves (19, 20) provided on the crankset axis (3).

11. The one-piece cycle crankset according to any of the preceding claims, **characterized by** the fact that the high rigidity and abrasion-resistant material of the first and second intermediate rings (15, 16) is a lightweight alloy.

12. A cycle with a one-piece cycle crankset, **characterized by** the fact that the crankset has characteristics of any of claims 1 to 11.

## Patentansprüche

1. Monoblock-Kettentrieb für Zweirad, der eine erste Kurbel (1) aufweist, die durch eine Kettentrieb-Achse (3) mit einer zweiten Kurbel (2) verbunden ist und mit dieser ein einziges zusammenhängendes Teil bildet, wobei die Kettentrieb-Achse (3) imstande ist, in einem Kettentrieb-Rohr (11) eines Zweiradrahmens (12) platziert zu sein mit Zwischenstellung eines ersten Lagers (13) und eines zweiten Lagers (14), die um die Kettentrieb-Achse (3) in der Nähe der Enden derselben angeordnet sind, um die Rotation der Kettentrieb-Achse im Kettentrieb-Rohr (11) zu erlauben, wobei ein großes Antriebszahnrad (4, 5) einer Kette in der Nähe eines der Enden der Kettentrieb-Achse (3) angeordnet und mit dieser rotierend verbunden ist, wobei ein erster und ein zweiter Zwischenring (15, 16) aus einem abriebfesten Werkstoff mit höherer Festigkeit auf der Kettentrieb-Achse (3) in der Nähe eines jeweiligen Endes derselben befestigt sind, um ein jeweiliges Lager (13, 14) aufzunehmen, **dadurch gekennzeichnet, dass** der Werkstoff des Kettentriebs ein Verbundwerkstoff ist und dass die Zwischenringe (15, 16) auf der Kettentrieb-Achse (3) durch Polymerisation des Verbundwerkstoffs der Kettentrieb-Achse nach einer Expansion des Werkstoffs befestigt sind.

2. Monoblock-Kettentrieb für Zweirad nach Anspruch 1, **dadurch gekennzeichnet, dass** der Werkstoff des Kettentriebs eine ausgehöhlte Leichtmetall-Legierung ist.

3. Monoblock-Kettentrieb für Zweirad nach Anspruch 2, **dadurch gekennzeichnet, dass** die Zwischenringe (15, 16) auf der Kettentrieb-Achse (3) durch Expansion der Legierung bei Formung des Kettentrieb befestigt werden.

4. Monoblock-Kettentrieb für Zweirad nach einem der vorangehenden Ansprüche, **dadurch gekennzeichnet, dass** der vom großen Zahnrad (4, 5) am weitesten entfernte Zwischenring (16) auf seinem nach außen gerichteten Ende mit einem Gewinde (28) ausgestattet ist, das imstande ist, mit einem Verbindungsring (26) mit Gewinde zusammenzuarbeiten.

5. Monoblock-Kettentrieb für Zweirad nach Anspruch 4, **dadurch gekennzeichnet, dass** der Verbindungsring (26) geschlitzt ist, um in seinem Schlitz (30) einen Einlagekeil (29) aufnehmen zu können, der bei der Montage die Verschraubung des Verbindungsrings (26) auf dem Gewinde (28) des Zwischenrings (16) erleichtert.

6. Monoblock-Kettentrieb für Zweirad nach Anspruch 5, **dadurch gekennzeichnet, dass** der Verbindungsring (26) ein Befestigungsloch (31) aufweist, das sich senkrecht zum Schlitz (30) des Verbindungsrings (26) auf der einen und anderen Seite desselben erstreckt, um eine Befestigungs- und Feststellschraube (32) aufnehmen zu können.

7. Monoblock-Kettentrieb für Zweirad nach einem der vorangehenden Ansprüche, **dadurch gekennzeichnet, dass** die Kettentrieb-Achse (3) eine konkave zentrale Aussparung (33) aufweist, die die Montage des Kettentriebs mit dem Rahmen erleichtert.

8. Monoblock-Kettentrieb für Zweirad nach einem der vorangehenden Ansprüche, wobei das große Zahnrad (4, 5) aus einer kreisförmigen gezahnten Platte besteht, die von einem Plattenhalter (6) getragen wird, **dadurch gekennzeichnet, dass** der Plattenhalter (6) Bestandteil des zusammenhängenden Teils (1, 2, 3) ist.

9. Monoblock-Kettentrieb für Zweirad nach Anspruch 8, **dadurch gekennzeichnet, dass** der Plattenhalter (6) die Form eines Sterns hat, dessen Strahlen (6') direkt auf dem Ende der ersten Kurbel (1) ihren Anfang nehmen, die mit der Kettentrieb-Achse (3) verbunden ist, wobei sie auf der Achse (A-A) derselben zentriert sind.

10. Monoblock-Kettentrieb für Zweirad nach einem der vorangehenden Ansprüche, **dadurch gekennzeichnet, dass** das erste Lager (13) auf der Kettentrieb-Achse (3) mit Hilfe von zwei Feststellringen (17, 18) festgestellt ist, die auf der einen und der anderen Seite des Lagers (13) angeordnet sind und in entsprechende Aushöhlungen (19, 20) eingreifen, die auf der Kettentrieb-Achse (3) vorgesehen sind.

11. Monoblock-Kettentrieb für Zweirad nach einem der vorangehenden Ansprüche, **dadurch gekennzeichnet, dass** der abriebfeste Werkstoff mit höherer Festigkeit des ersten und zweiten Zwischenrings (15, 16) eine Leichtmetall-Legierung ist.

12. Zweirad mit Monoblock-Kettentrieb für Zweirad, **dadurch gekennzeichnet, dass** der Kettentrieb die Merkmale eines der Anspruche 1 bis 11 aufweist.
